# FASCICULE DE BREVET EUROPEEN

(11) **EP 0 728 267 B1**
(45) Date de publication et mention de la délivrance du brevet: **10.03.1999**
(21) Numéro de dépôt: 95929933.0
(22) Date de dépôt: 08.09.1995
(51) Int. Cl.: F16F 15/131, F16F 15/139

(54) **VOLANT AMORTISSEUR, NOTAMMENT POUR VEHICULE AUTOMOBILE**
DREHSCHWINGUNGSDÄMPFER, INSBESONDERE FÜR KRAFTFAHRZEUGE
DAMPING FLYWHEEL, PARTICULARLY FOR MOTOR VEHICLES

(30) Priorité: 09.09.1994 FR 9410880
(43) Date de publication de la demande: 28.08.1996
(73) Titulaire: VALEO, 75017 Paris (FR)
(72) Inventeur: BONFILIO, Ciriaco, F-92110 Clichy (FR)
(74) Mandataire: Gamonal, Didier
(86) Numéro de dépôt international: FR9501154
(87) Numéro de publication internationale: WO9607837

(56) Documents cités:
- DE-A- 3 629 225
- DE-A- 4 307 830
- DE-U- 8 718 035
- FR-A- 2 089 765
- FR-A- 2 618 199
- FR-A- 2 700 192

## Description

La présente invention concerne les volants amortisseur, notamment pour véhicule automobile, du genre comportant deux masses coaxiales montées mobiles l'une par rapport à l'autre à l'encontre d'organes élastiques à action circonférentielle.

Un tel volant est décrit dans le document FR-A-2 695 579. Conforme au préambule de la revendication 1.

Dans celui-ci la première masse, celle destinée à être fixée à l'arbre menant (le vilebrequin du moteur à combustion interne dans ce cas) comporte, d'une part, une couronne allongée axialement, et qui porte une couronne de démarreur, et, d'autre part, un flasque de support peu épais et un disque, qui sont solidaires de la couronne par sertissage. L'autre masse est propre à être calée en rotation sur un arbre mené (l'arbre d'entrée de la boîte de vitesses dans ce cas).

La couronne retient, radialement vers l'extérieur, les organes élastiques.

Cette disposition permet de rendre étanche une cavité abritant les organes élastiques et ne présente pas les inconvénients d'un rivetage qui, pour l'implantation des rivets nécessaires, prend radialement une certaine place.

Grâce à l'économie de place il est possible, les conditions étant par ailleurs égales, de disposer les organes élastiques sur une circonférence de plus grand diamètre, au bénéfice notamment du couple transmis.

En pratique dans ce document le flasque de support est en acier pour pouvoir, lors du sertissage, envahir aisément radialement par fluage une gorge pratiquée dans la couronne en fonte, le sertissage laissant une cicatrice sur ledit flasque.

Il en résulte que pour effectuer le sertissage la couronne doit avoir une épaisseur qui tient compte de l'épaisseur de l'outil de sertissage et de la taille de la gorge, une certaine quantité de matière devant exister entre la périphérie externe de la couronne et sa gorge pour des questions de résistance. De même l'épaulement de la couronne servant à l'appui du flasque doit avoir une hauteur qui tient compte de l'outil de sertissage.

Il en résulte, pour un encombrement radial donné du volant amortisseur, qu'il n'est pas possible de positionner les organes élastiques sur une circonférence de plus grand diamètre.

Il en est d'autant plus ainsi que, la couronne étant en fonte, la première masse n'a pas une résistance à la force centrifuge aussi grande que souhaitée.

En outre le flasque ne peut pas avoir des formes complexes.

Dans le document FR-A-2 700 192 le flasque est remplacé par un plateau de support pur une pièce permettant de définir avec le plateau de support un canal annulaire de logement des organes élastiques.

Pour ce faire la pièce et le plateau de support sont réunis par une cage en tôle d'orientation axiale servant à bloquer des goupilles permettant une liaison en rotation entre la pièce et le plateau de support.

Il en résulte que la première masse comporte une couronne d'orientation axiale à sa périphérie externe et que les goupilles ne permettent pas d'implanter les organes élastiques sur le plus grand diamètre possible.

La présente invention a pour objet de pallier, de manière simple et économique, ces inconvénients et donc de créer une masse primaire permettant l'implantation des organes élastiques sur un plus grand diamètre, tout en ayant une meilleure résistance aux effets de la force centrifuge et en ayant la possibilité d'avoir des formes plus complexes pour la pièce de support de la couronne.

Suivant l'invention ce problème est résolu par la partie caractérisante de la revendication 1.

Grâce à l'invention, le plateau de support, plus épais que le flasque de support de l'art antérieur, peut avoir aisément par moulage une forme complexe.

Ce plateau présente avantageusement au moins des logements pour les organes élastiques.

Ceci est favorable à une réduction des coûts et de l'encombrement axial du volant.

Ce plateau présente également radialement en dessous des organes élastiques un manchon servant à l'implantation de moyens de frottement et de rondelles d'étanchéité.

Centralement ce plateau peut présenter un moyeu interne permettant le montage d'un palier pour montage rotatif de la seconde masse.

Grâce à l'invention, une faible épaisseur de matière peut exister entre la portée d'emmanchement et la périphérie externe de la couronne ce qui permet d'augmenter le diamètre d'implantation des organes élastiques.

La couronne en acier permet un bon sertissage, ainsi qu'une augmentation de l'inertie et une plus grande résistance à la centrifugation.

En outre, une bonne étanchéité est obtenue. On appréciera que l'assemblage est réalisé économiquement avec un nombre de pièces réduit sans avoir recours à des organes de fixation ou à des opérations de soudage.

Il est possible d'augmenter, par rapport à une couronne en fonte, la longueur axiale au bénéfice d'un gain supplémentaire en inertie.

Compte tenu de la résistance de l'acier il est possible de positionner les organes élastiques sur un plus grand diamètre, d'autant plus que la collerette du plateau de support et le bord de fixation de la couronne permettent, grâce à l'invention, une telle augmentation.

Tout ceci permet, au bénéfice d'une réduction des usures et des frottements, de supprimer un étage d'organes élastiques internes.

On peut fixer aisément par soudage sur la couronne un disque délimitant une cavité étanche avec ladite couronne et ledit plateau creusé pour logement des organes élastiques. On obtient ainsi de manière économique une bonne étanchéité.

Dans une forme de réalisation, la collerette est cylindrique et comporte une portée axiale délimitée par deux épaulements transversaux. Dans ce cas le logement du bord de fixation de la couronne présente un épaulement frontal pour coopérer avec l'épaulement concerné de la collerette.

En variante les portées d'engagement et de montage sont globalement d'orientation axiale en étant de forme tronconique.

Dans une forme de réalisation le plateau de support porte à sa périphérie externe une frette, telle qu'une couronne de démarrage.

Cette frette présente un alésage interne évasé en sorte qu'une mince bande de matière peut être présente entre les organes élastiques et l'évasement de la frette. Tout ceci favorise une augmentation du diamètre d'implantation des organes élastiques.

D'une manière générale la frette est un élément de sécurité car elle est implantée près de l'épaulement de sertissage en sorte que tout risque de désolidarisation est évité car l'extrémité rabattue est emprisonnée entre la frette et l'épaulement de sertissage et ne peut donc se déployer.

La description qui va suivre illustre l'invention en regard des dessins annexés dans lesquels :
- la figure 1 est une vue en coupe axiale partielle d'un volant amortisseur selon l'invention ;
- la figure 2 est une vue à plus grande échelle de la partie haute de la figure 1 ;
- la figure 3 est une vue analogue à la figure 2 pour un autre exemple de réalisation.

Dans ces figures, on voit en 1 un volant amortisseur, appelé usuellement double volant amortisseur, pour véhicule automobile comportant deux masses coaxiales 2, 3 montées mobiles l'une par rapport à l'autre à l'encontre d'organes élastiques 4 à action circonférentielle et de moyens de frottement 5. Ce volant est du type de celui décrit dans le document FR-A-94 08 324 déposé le 30 juin 1994 et publié après la date de priorité de la demande présente.

Ainsi la première masse 2 présente centralement un moyeu interne 21 doté d'une pluralité de trous 22, répartis régulièrement circonférentiellement, pour passages de vis de fixation 23 de la masse 2 au vilebrequin du moteur à combustion interne du véhicule automobile formant un arbre menant.

Ce moyeu 21 est ici d'un seul tenant avec un plateau de support 24, formant pièce de support 3, et s'étendant globalement transversalement en direction opposée à l'axe de l'ensemble X-X.

En variante le moyeu 21 peut être rapporté sur la portion centrale du plateau 24, qui porte à sa périphérie externe une couronne de démarrage 25 formant une frette.

Ce plateau 24, de forme complexe, est entaillé localement à sa périphérie externe pour formation de bossages saillants 26 servant d'appui aux extrémités circonférentielles de ressorts courbes 4 hélicoïdaux, ici précintrés, constituant les organes élastiques à action circonférentielle. En variante, les bossages 26 consistent en des pièces rapportées de manière étanche par rivetage sur le plateau 24.

Le plateau de support 24 est conformé entre les bossages 26 pour recevoir et loger de manière étanche les ressorts 4, du type ressort à boudins éventuellement à pas variable. A cet effet le plateau 24 est creusé.

Radialement en dessous des bossages 26 et des ressorts 4, ce plateau 24 présente d'un seul tenant un manchon 27 d'orientation axiale dirigé vers la deuxième masse 3. Le manchon 27 s'étend radialement au-dessus du moyeu interne 21.

L'extrémité libre du manchon 27 présente intérieurement une gorge pour réception d'un circlips 51.

L'alésage interne du manchon 27 présente également au moins une rainure axiale 28, formant mortaise, pour réception d'une patte radiale complémentaire 52 appartenant à une rondelle d'application 53.

Cette rondelle d'application 53, ici métallique, est soumise à l'action d'une rondelle élastique à action axiale 54, ici du type rondelle Belleville, prenant appui sur le circlips 51 pour serrage d'une garniture de frottement 54, ici en matière synthétique, entre ladite rondelle 53 et le plateau 24 (la face de celui-ci tournée vers la deuxième masse 3).

La deuxième masse 3 comporte un plateau 31, ici en fonte, doté à sa périphérie externe d'une jupe annulaire 32, éventuellement fractionnée, d'orientation axiale servant, de manière connue en soi, à la fixation d'un couvercle d'un mécanisme d'embrayage (non représenté) comportant un plateau de pression soumis à l'action d'un diaphragme prenant appui sur le couvercle.

La face externe 33 du plateau 31, tournée en direction opposée au plateau 24, sert de face de friction à un disque d'embrayage (non représenté) présentant à sa périphérie externe des garnitures de frottement solidaires d'un support accouplé à un moyeu destiné à être calé en rotation sur l'arbre d'entrée de la boîte de vitesses formant un arbre mené. Les garnitures de frottement du disque d'embrayage sont destinées à être serrées entre les plateaux de réaction 31 et de pression sous l'action du diaphragme manoeuvrable à l'aide d'une butée de débrayage (non représentée).

Ainsi le plateau 31, donc la deuxième masse 3, est calé en rotation, de manière débrayable, à l'arbre d'entrée de la boîte de vitesses.

A sa périphérie interne le plateau 31 présente un moyeu externe 34 entourant en partie le moyeu interne 21.

Un palier 6, ici un roulement à billes, est interposé radialement entre les deux moyeux 21, 34 présentant chacun un épaulement servant au calage axial respectivement de la bague interne et externe du roulement 6.

La bague interne est calée axialement dans l'autre sens par une rondelle 61 fixée par une pluralité de rivets 62 au moyeu 21. Cette rondelle 61 sert par ailleurs à l'appui des têtes des vis de fixation 23.

La bague externe du roulement 6 est calée axialement dans l'autre sens par des pattes 35 ménagées à la périphérie interne d'un voile 36, ici en tôle emboutie, fixé à la faveur de pattes 37, par des rivets 55 au moyeu 34 et au plateau 31. Ce voile 36, intercalé axialement entre les plateaux 24, 31, appartient à la deuxième masse 3 et présente donc à sa périphérie interne une pluralité de pattes 35, 37 respectivement, de calage du roulement 6 et de fixation du voile 36, décalées axialement.

Centralement ce voile 36 a une forme sinueuse pour ne pas interférer avec le manchon 27 et contourner celui-ci. La tête 56 des rivets 55 est en forme de pion pour engrener, avec ou sans jeu circonférentiel, avec la rondelle de frottement 54 présentant pour ce faire à sa périphérie interne des échancrures 57 propres à engrener avec les têtes 56.

Lors du mouvement relatif entre les masses 2, 3 la rondelle 54 est entraînée, éventuellement après rattrapage d'un jeu, par les rivets 55 avec apparition d'un frottement entre la rondelle 54, d'une part, et le plateau 24 et la rondelle 53, d'autre part.

Les moyens de frottement 5 sont donc portés en majeure partie par la masse 2 - son manchon 27 - et comportent les rondelles 51, 53, 54 ainsi que les rivets 55 de la deuxième masse 3. On notera la présence de trous (non référencés) permettant le rivetage du voile 36 à l'aide des rivets 55. Après ce rivetage on enfile un cache (non référencé) dans chacun desdits trous.

Le voile métallique 36 présente à sa périphérie externe des bras transversaux 38 intercalés, avec ou sans jeu circonférentiel selon les applications, entre les extrémités circonférentielles des ressorts 4 prenant appui sur les bossages 26 et, en vis-à-vis des bossages 26, sur des emboutis 71 appartenant à un disque 70 ici métallique (en tôle emboutie).

Le plateau 24 et le disque 70 sont donc disposés de part et d'autre du voile 36. Pour ce faire le disque 70 est rapporté à fixation sur une couronne 8 annulaire, d'orientation axiale, que présente la première masse 2 à sa périphérie externe.

Cette couronne 8 est solidaire du plateau de support 24 en étant montée sur celui-ci de manière décrite ci-après. De manière connue en soi, une cavité étanche 9, portée en majeure partie par la masse 2, est délimitée par le plateau 24, la couronne 8, le disque 70. Cette cavité 9 est remplie partiellement de graisse pour lubrifier les ressorts 4 logés dans la cavité 9 ainsi que les bras 38 du voile 36. Intérieurement cette cavité est fermée de manière étanche par deux rondelles d'étanchéité 91, 92 disposées de part et d'autre du voile 36. Ces rondelles 91, 92, ici métalliques, sont montées sous précontrainte. La rondelle 91 prend appui à sa périphérie externe sur un bourrelet du voile 36 et à sa périphérie interne sur un bourrelet du plateau 24 ménagé à la périphérie externe du manchon 27.

La rondelle 92 prend appui à sa périphérie externe sur un bourrelet du disque 70, ménagé à la périphérie interne de celui-ci, et à sa périphérie interne sur un appui du voile 36, qui s'incline à ce niveau jusqu'au bourrelet d'appui de la rondelle 91.

Un espace existe entre le disque 70 et le plateau de réaction 31 d'épaisseur décroissante en allant de la périphérie interne à la périphérie externe de sa face de friction 33 pour réduction de l'encombrement axial.

La couronne 8 s'étend radialement au-dessus de la périphérie externe de la jupe 32 du plateau de réaction 32.

Ceci est rendu possible grâce à l'amélioration de la tenue à la force centrifuge de la première masse 2 dans un encombrement radial réduit donné.

Pour ce faire, suivant l'invention, la première masse 2 est en deux parties à sa périphérie externe à savoir le plateau de support 24 en matière moulable, et la couronne 8 est en acier. Cette couronne 8 est donc plus lourde qu'une couronne en fonte au bénéfice de l'augmentation de l'inertie.

Ici le plateau 24 est en fonte et centre la couronne 8.

Selon l'invention, on emmanche à immobilisation axiale la couronne 8 sur la périphérie externe du plateau de support 24, puis on effectue un verrouillage par sertissage, conduisant à un fluage de matière de la couronne 8 radialement vers l'axe de l'ensemble et à la fixation de ladite couronne 8 sur la périphérie externe du plateau 24 (la tranche externe de celui-ci).

Plus précisément, le plateau de support 24 présente à sa périphérie externe successivement, axialement, en allant en direction de la couronne 8, une première portée de frettage 60, une portée inclinée d'immobilisation 61, une deuxième portée 62, un épaulement de sertissage 63 et une troisième portée de montage 64 ; le diamètre de la troisième portée 64 étant supérieur à celui de la deuxième portée 62, qui présente un diamètre supérieur à celui de la première portée 60. Les trois portées 60, 62, 64 sont de forme annulaire et d'orientation axiale, tandis que l'épaulement 63 est d'orientation transversale, la portée 61 formant une portée de raccordement entre les portées 60,62.

La troisième portée 64 se raccorde à un épaulement terminal 65 de blocage d'orientation transversale formant l'extrémité libre de la périphérie externe du plateau 24, décalée axialement par rapport aux bossages 26 et ce en direction du voile 36. Il est ainsi formé à la périphérie externe du plateau 24, suivant une caractéristique de l'invention, une collerette 63, 64, 65 cylindrique saillante radialement pour la fixation de la couronne 8 et ce en saillie axiale.

La couronne 8 allongée axialement, présente intérieurement au niveau de son bord 80 de fixation au plateau 24 un épaulement transversal 81 frontal, propre à venir en contact avec l'épaulement terminal 65, prolongé par une portée annulaire d'orientation axiale 82 d'emmanchement propre à coopérer avec la troisième portée de montage 64 en étant emmanchée à centrage sur celle-ci. Le bord 80 présente donc intérieurement un logement épaulé 81, 82 pour montage de la collerette 63, 64, 65.

La portée 82 est initialement (avant assemblage) plus longue que la portée 64 et la couronne métallique 8 à une épaisseur réduite au niveau de l'extrémité de son bord 80 délimité par la portée 82. Cette épaisseur décroît donc dans le sens axial allant de l'épaulement 81 à l'extrémité du bord 80. En bout du bord 80 il est ainsi ménagé une portion saillante axialement destinée à être rabattue radialement vers l'intérieur au contact de l'épaulement de sertissage 63 pour formation d'une aile radiale 83, de blocage axial dirigée radialement vers l'axe de l'ensemble. Dans l'autre sens axial la couronne 8 est en butée par son épaulement 81 contre l'épaulement 65.

La couronne 8 est ainsi étagée à sa périphérie externe, le bord 80 ayant suivant une caractéristique de l'invention, à sa périphérie externe un diamètre inférieur à celui de la périphérie externe de la partie principale de la couronne 8. Ainsi le pignon 125 du démarreur peut s'engager au-dessus de l'extrémité du bord 80 pour entraîner la couronne de démarrage 25.

On notera que le pliage de l'aile 83 est aisé du fait que la couronne est en acier et que les portées 62, 63 délimitent un logement pour l'aile 83.

Ainsi on emmanche axialement la portée 82 sur la portée de montage 64, de préférence à serrage, puis, l'épaulement 81 étant en contact de l'épaulement terminal 65, on rabat la matière de la portion saillante du bord 80 radialement vers l'intérieur au contact de l'épaulement de sertissage 63 pour formation de l'aile radiale 83 précitée. On obtient ainsi une fixation par sertissage et emmanchement de la couronne 8 sur le plateau 24 avec immobilisation radiale et circonférentielle de la couronne 8 sur la tranche externe du plateau 24.

Après on monte la couronne de démarreur 25 sur le plateau 24. Pour ce faire, de manière connue en soi, on chauffe la couronne et on l'enfile axialement sur la portée de frettage 60 jusqu'à ce que ladite couronne 25, intérieurement chanfreinée, vienne buter contre la portée d'immobilisation 61, le chanfrein de la couronne 25 étant dimensionné et conformé en fonction de la portée complémentaire 61.

Après ce montage, l'aile 83 est emprisonnée axialement entre l'épaulement 63 et la couronne 25.

Ainsi grâce à la couronne 25 on est certain que l'aile 83 ne se dépliera pas en fonctionnement. On améliore donc la durée de vie du volant amortisseur en ayant une sécurité supplémentaire.

On notera, le plateau 24 étant en fonte, que celui-ci peut avoir des formes compliquées aisément obtenues par moulage pour notamment formation du manchon 27, du moyeu 21, des bossages 26 et logement des ressorts 4 au bénéfice d'une réduction du nombre de pièces.

Grâce à ceci il est possible de monter une pièce de protection 93, par exemple métallique, en forme de goulotte entre la périphérie interne du rebord périphérique annulaire de la première masse 2 - formée par la couronne 8 et la partie périphérique externe associée du plateau 24 - et les ressorts 41.

Cette pièce 93 évite une incrustation des ressorts 4 dans ledit rebord.

Ainsi la couronne 8 retient, radialement vers l'extérieur, les organes élastiques 4 à la faveur d'une empreinte permettant le montage desdits organes.

Cette empreinte de montage des ressorts 4 ménagée dans le plateau 24 est donc aisément réalisable par moulage. L'empreinte correspondante réalisée dans l'alésage interne de la couronne 8 est également facilement réalisable.

Comme visible dans les figures, la pièce 93 est montée dans les empreintes de la couronne 8 et du plateau 24.

Dans une forme de réalisation on usine ces empreintes après fixation de la couronne 8 au plateau de support 24.

On notera que le disque 70 peut être aisément fixé par soudage étanche à la couronne en acier.

Pour ce faire, la couronne 8 présente intérieurement un changement de diamètre du côté de son bord libre 85 avec formation d'un épaulement 86. Le disque 70 présente alors à sa périphérie une partie terminale transversale, au contact de l'épaulement 86, prolongée intérieurement par une partie annulaire d'orientation axiale au contact avec la périphérie interne de plus petit diamètre de la couronne. Cette partie axiale est prolongée par une partie globalement d'orientation transversale dirigée vers l'axe de l'ensemble et présentant les emboutis 71.

On soude alors, de préférence au laser pour ménager la graisse, la partie transversale terminale du disque 70 au contact de la périphérie interne du plus grand diamètre de la couronne 8.

En fonctionnement le voile 36 actionne par ses bras 38 les ressorts 4 accouplant élastiquement la première masse 2 au disque 36 et à la deuxième masse 3.

Les ressorts 4, en appui sur les bossages 26 et les emboutis 71, sont donc comprimés et un frottement apparaît de manière précitée avec mises en action de la rondelle 54.

Bien entendu, l'invention n'est pas limitée à l'exemple de réalisation décrit. En particulier la fixation du disque 70 à la couronne 8 peut être réalisée par sertissage étanche comme décrit dans le document FR-A-92 10 958 publié sous le numéro 2 695 579.

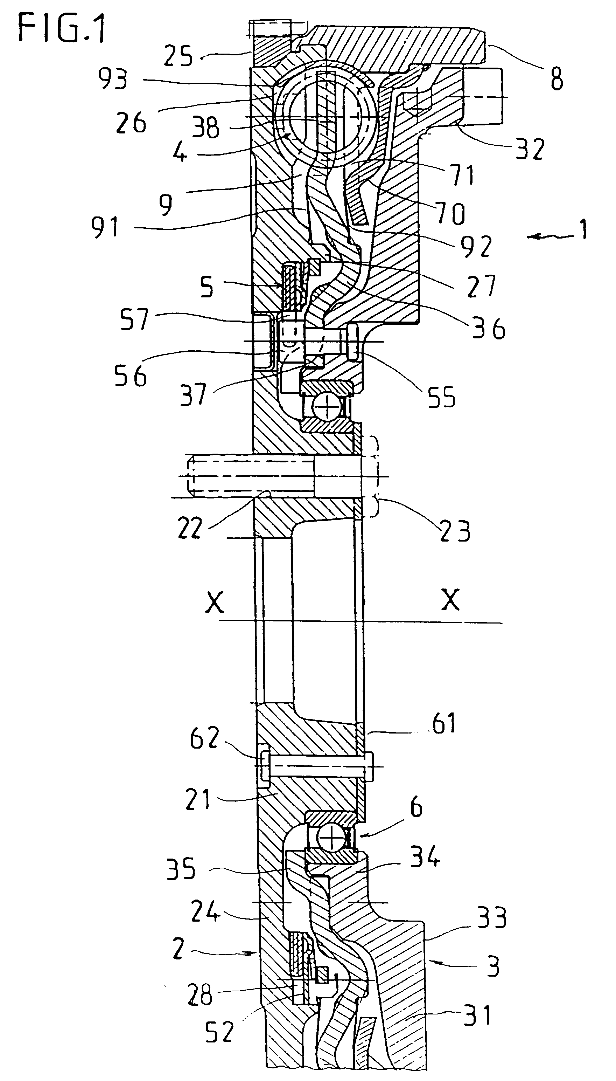

La couronne 8 peut être pourvue de dents à sa périphérie externe et former ainsi une couronne de démarrage. Dans ce cas la couronne 25 de la figure 1 est dépourvue de dents. On appréciera que dans tous les cas la couronne 25 (pourvue ou non de dents) constitue une frette renforçant la tenue du plateau de support 24 à la force centrifuge. Cette frette 25 est décalée axialement par rapport aux pattes 38 du voile et aux ressorts 4.

Elle est implantée au droit de la partie principale du plateau 24 en étant montée sur la portée de frettage 60. Son alésage interne comporte une portion cylindrique d'orientation axiale prolongée par une portion évasée coopérant avec la portée d'immobilisation 61 de forme complémentaire à celle de l'évasement de la frette 25.

La portée 61 peut être bombée ou autre sa forme dépendant de celle de l'évasement de la frette 25. La portée de montage 64 s'étend donc en saillie axiale par rapport à la partie principale du plateau 24, notamment ses bossages 26 et l'épaulement 65 a une plus faible hauteur que dans l'art antérieur.

Grâce à cette disposition une mince bande de matière existe entre la frette 25 et les ressorts 4, qui peuvent donc être implantés sur un très grand diamètre, la couronne 8 en acier ayant une bonne tenue à la force centrifuge. Les ressorts 4 sont donc implantés en partie en dessous de la portée d'immobilisation 61. Cette portée 61 appartient donc à une bande de matière de jonction de la collerette 63-64,65 à la partie principale du plateau de support 24.

Par rapport à une couronne en fonte plus légère il est donc possible de rallonger axialement la couronne 8 au bénéfice d'un gain supplémentaire en inertie.

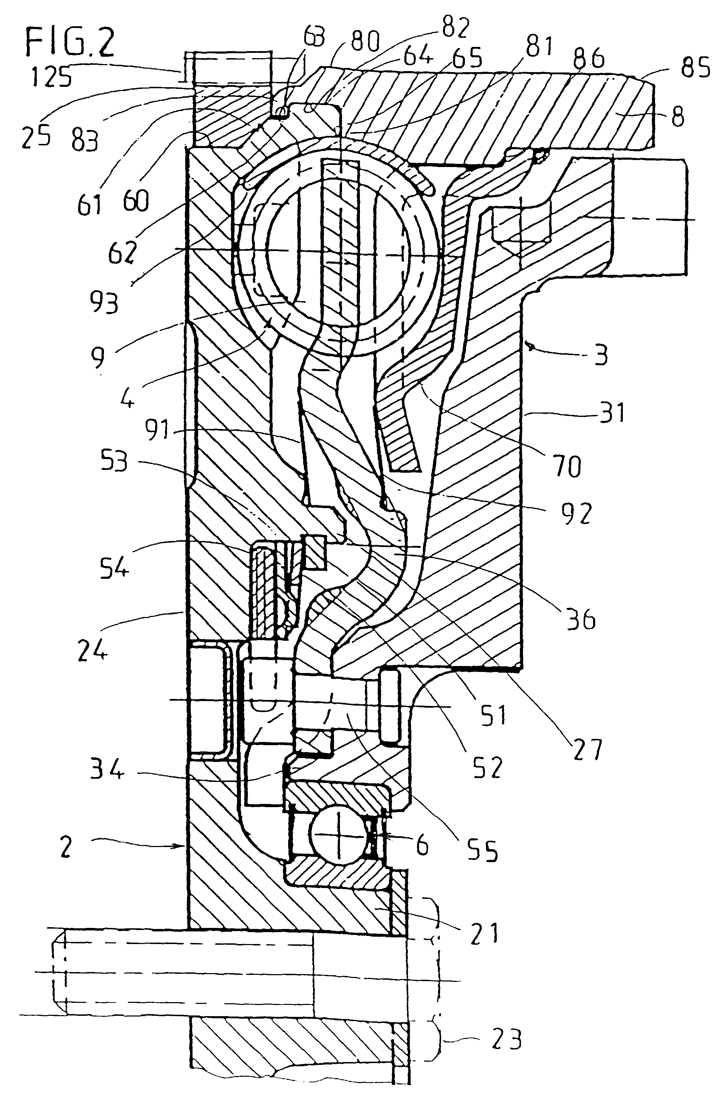

Cet allongement permet, d'une part, de souder axialement plus loin le disque 70 et donc de ménager la graisse de la cavité 9, tout en ayant un très bon centrage du disque 70 et, d'autre part, de ménager un logement pour le pignon 125 du démarreur (figure 2).

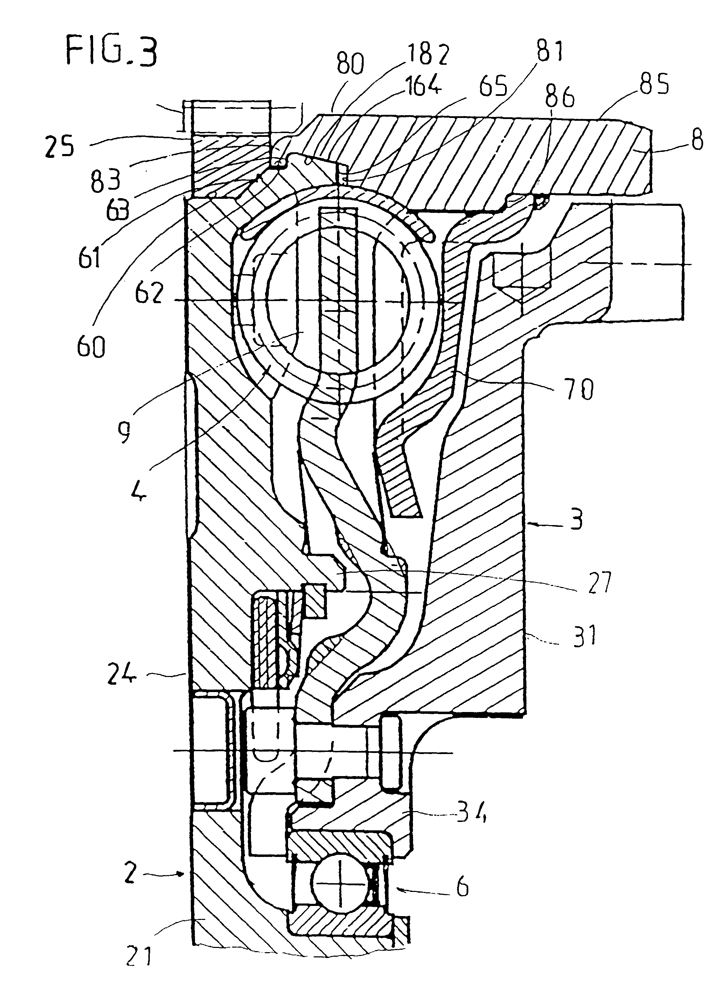

En variante (figure 3) les portées de montage 164 et d'engagement 182 peuvent être globalement d'orientation axiale en étant de forme tronconique complémentaire. Dans ce cas l'épaulement 81 de la figure 2 n'est plus fonctionnel. Il en est de même de l'épaulement 65. L'épaulement de sertissage peut être globalement transversal en étant incliné légèrement.

De même la portée 62 peut être globalement d'orientation axiale en étant légèrement inclinée.

L'extrémité du bord de fixation, destinée à être rabattue au contact de l'épaulement de sertissage peut être continue ou fractionnée annulairement en pattes.

On peut emmancher à la presse la couronne sur la portée cylindrique ou tronconique de montage.

Plus on a de serrage moins on a besoin d'effort au niveau de l'extrémité rabattue du bord libre pour caler axialement la couronne.

Tout cela dépend des applications.

Le plateau de support 24 peut être à base d'aluminium ou de magnésium tout en ayant une première masse 2 d'inertie importante du fait de la présence de la couronne 8.

On appréciera que la forme complexe du plateau 25, en combinaison avec la forme sinueuse du disque 36, permet d'implanter les moyens de frottement au-dessus du moyeu interne 21 en sorte qu'un congé de raccordement est présent dans la zone d'enracinement entre la partie principale du plateau 24 et le moyeu 21.

Cette zone d'enracinement est très rigide. En outre le moyen externe 34 fait saillie axialement en direction du plateau 24 avec réduction de l'encombrement axial et accroissement de la rigidité du plateau de réaction 31.

## Revendications

1. Volant amortisseur, notamment pour véhicule automobile, comportant deux masses (2,3) montées mobiles l'une par rapport à l'autre à l'encontre d'organes élastiques (4) à action circonférentielle, à savoir une première masse (2) destinée à être fixée à un arbre menant et une seconde masse (3) propre à être solidarisée en rotation à un arbre mené, dans lequel la première masse (2) comporte une pièce de support (24) pour une couronne (8) d'orientation axiale montée à la périphérie externe de la pièce de support (24) avec intervention de moyens de sertissage entre la pièce de support (24) et la couronne (8) pour leur fixation mutuelle, ladite couronne servant à retenir radialement vers l'extérieur les organes élastiques (4), caractérisé en ce que la pièce de support (24) consiste en un plateau de support (24) en matière moulable, en ce que la couronne (8) est en acier, en ce que le plateau de support (24) présente à sa périphérie externe une collerette (63,64,65-63,164,65) saillante radialement avec une portée de montage (64-164) globalement d'orientation axiale et un épaulement de sertissage (63) globalement d'orientation transversale, en ce que la couronne (8) comporte un bord de fixation (80) au plateau de support (24) présentant intérieurement une empreinte pour le montage des organes élastiques (4) et un logement pour ladite collerette avec une portée d'emmanchement (82,182) globalement d'orientation axiale et initialement plus longue que la portée de montage (64,164), et en ce que l'extrémité du bord de fixation (80) est d'épaisseur réduite au niveau de la portée d'emmanchement (82,182), en sorte que, après emmanchement de la portée d'emmanchement (82,182) sur la portée de montage (64, 164), la matière (83) de l'extrémité du bord de fixation (80) est rabattue au contact de l'épaulement de sertissage (63) pour fixation de la couronne (8) sur le plateau de support (24).

2. Volant selon la revendication 1, caractérisé en ce que le plateau de support (24) est en fonte.

3. Volant selon la revendication 1 ou 2, caractérisé en ce que le plateau de support (24) présente une empreinte pour le montage des organes élastiques (4).

4. Volant selon l'une quelconque des revendications 1 à 3, caractérisé en ce que l'extrémité du bord de fixation (80) est fragmentée annulairement en pattes.

5. Volant selon l'une quelconque des revendications 1 à 4, caractérisé en ce que la collerette (63,64,65) du plateau de support (24) est de forme cylindrique et présente, de part et d'autre de sa portée de montage (64) d'orientation axiale, deux épaulements transversaux (63,65), à savoir l'épaulement de sertissage (63) et un épaulement terminal (65) de blocage pour coopération avec un épaulement frontal (81) d'orientation transversal que présente le logement (81,82) du bord libre (80) de la couronne (8) à cet effet et en ce que la portée d'emmanchement (82) de la couronne (8) est d'orientation axiale.

6. Volant selon l'une quelconque des revendications 1 à 4, caractérisé en ce que la collerette (63,164,65) du plateau de support (24) présente une portée de montage (182) globalement d'orientation axiale en étant de forme tronconique et en ce que la portée d'emmanchement de la couronne (8) a une forme tronconique complémentaire à celle de ladite portée de montage (164).

7. Volant selon l'une quelconque des revendications 1 à 6, caractérisé en ce que ladite collerette s'étend en saillie axiale à la périphérie externe du plateau de support (24), tandis que le plateau de support porte des bossages (26) pour appui des organes élastiques (4) à action circonférentielle, et en ce que ladite collerette s'étend en saillie et axiale par rapport auxdits bossages (26).

8. Volant selon la revendication 7 et 3, caractérisé en ce qu'une pièce de protection (93) est montée radialement entre les organes élastiques (4), consistant en des ressorts courbes hélicoïdaux, et l'empreinte de la couronne (8) et du plateau de support (24).

9. Volant selon l'une quelconque des revendications 1 à 8, dans lequel le plateau de support (24) porte à sa périphérie externe une frette (25) telle qu'une couronne de démarrage, caractérisé en ce que l'extrémité rabattue (83) du bord de fixation (80) est emprisonnée axialement entre ladite frette (25) et l'épaulement de sertissage (63).

10. Volant selon la revendication 9, caractérisé en ce que ladite frette (25) a un alésage interne doté d'un évasement pour coopération avec une portée d'immobilisation (61) de forme complémentaire que présente le plateau de support à sa périphérie externe et en ce que la frette (25) est décalée axialement par rapport auxdits organes élastiques (4).

11. Volant selon la revendication 10, caractérisé en ce que lesdits organes élastiques (4) sont implantés en partie en dessous de ladite portée d'immobilisation (61).

12. Volant selon la revendication 11, caractérisé en ce que la portée d'immobilisation (61) appartient à une mince bande de matière de jonction de ladite collerette à la partie principale du plateau de support (24).

13. Volant selon l'une quelconque des revendications 11 ou 12, comportant des moyens de frottement (5), caractérisé en ce que les moyens de frottement sont implantés à la faveur d'un manchon (27) d'un seul tenant avec le plateau de support (24), en ce que le plateau de support (24) est creusé pour logement des organes élastiques et en ce que ledit manchon (27) est implanté radialement en dessous des organes élastiques (4) et radialement au-dessus d'un moyeu interne que présente centralement le plateau (24).

## Patentansprüche

1. Dämpfungsschwungrad, insbesondere für Kraftfahrzeuge, umfassend zwei Massen (2, 3), die im Verhältnis zueinander beweglich entgegen umfangsmäßig wirksamen elastischen Organen (4) gelagert sind, und zwar eine erste Masse (2), die für die Befestigung an einer treibenden Welle bestimmt ist, und eine zweite Masse (3), die drehfest mit einer getriebenen Welle verbunden werden kann, wobei die erste Masse (2) ein Trägerelement (24) für einen axial ausgerichteten Kranz (8) umfaßt, der am äußeren Rand des Trägerelements (24) unter Einfügung von Aufpreßmitteln zwischen dem Trägerelement (24) und dem Kranz (8) für ihre wechselseitige Befestigung gelagert ist, wobei der besagte Kranz dazu dient, die elastischen Organe (4) radial nach außen zu halten, **dadurch gekennzeichnet**, daß das Trägerelement (24) aus einer Trägerplatte (24) aus formbarem Werkstoff besteht, daß der Kranz (8) aus Stahl besteht, daß die Trägerplatte (24) an ihrem äußeren Rand einen radial vorstehenden Kragen (63, 64, 65-63, 164, 65) mit einer insgesamt axial ausgerichteten Montagesitzfläche (64-164) und einer insgesamt quer ausgerichteten Aufpreßschulter (63) aufweist, daß der Kranz (8) eine Befestigungskante (80) zur Befestigung an der Trägerplatte (24) umfaßt, die innen eine Eintiefung für den Einbau der elastischen Organe (4) und eine Aufnahme für den besagten Kragen mit einer insgesamt axial ausgerichteten Aufstecksitzfläche (82, 182) aufweist, die anfänglich länger als die Montagesitzfläche (64, 164) ist, und daß das Ende der Befestigungskante (80) in Höhe der Aufstecksitzfläche (82, 182) eine verringerte Dicke aufweist, so daß nach dem Aufstecken der Aufstecksitzfläche (82, 182) auf der Montagesitzfläche (64, 164) der Werkstoff (83) des Endes der Befestigungskante (80) in Kontakt mit der Aufpreßschulter (63) umgebogen wird, um den Kranz (8) an der Trägerplatte (24) zu befestigen.

2. Schwungrad nach Anspruch 1 , **dadurch gekennzeichnet**, daß die Trägerplatte (24) aus Gußeisen besteht.

3. Schwungrad nach Anspruch 1 oder 2 , **dadurch gekennzeichnet**, daß die Trägerplatte (24) eine Eintiefung für den Einbau der elastischen Organe (4) aufweist.

4. Schwungrad nach einem der Ansprüche 1 bis 3, **dadurch gekennzeichnet**, daß das Ende der Befestigungskante (80) ringförmig in Ansätze unterteilt ist.

5. Schwungrad nach einem der Ansprüche 1 bis 4, **dadurch gekennzeichnet**, daß der Kragen (63, 64, 65) der Trägerplatte (24) mit zylindrischer Form ausgeführt ist und beiderseits seiner axial ausgerichteten Montagesitzfläche (64) zwei Querschultern (63, 65) aufweist, und zwar die Aufpreßschulter (63) und eine endseitige Sperrschulter (65) für das Zusammenwirken mit einer quer ausgerichteten stirnseitigen Schulter (81), die die Aufnahme (81, 82) der freien Kante (80) des Kranzes (8) dazu aufweist, und daß die Aufstecksitzfläche (82) des Kranzes (8) axial ausgerichtet ist.

6. Schwungrad nach einem der Ansprüche 1 bis 4, **dadurch gekennzeichnet**, daß der Kragen (63, 164, 65) der Trägerplatte (24) eine insgesamt axial augerichtete Montagesitzfläche (182) mit kegelstumpfartiger Form aufweist und daß die Aufstecksitzfläche des Kranzes (8) eine mit der besagten Montagesitzfläche (164) formschlüssige kegelstumpfartige Form hat.

7. Schwungrad nach einem der Ansprüche 1 bis 6, **dadurch gekennzeichnet**, daß sich der besagte Kragen axial vorstehend am äußeren Rand der Trägerplatte (24) erstreckt, während die Trägerplatte Vorsprünge (26) für die Auflage der umfangsmäßig wirksamen elastischen Organe (4) trägt, und daß sich der besagte Kragen vorstehend und axial im Verhältnis zu den besagten Vorsprüngen (26) erstreckt.

8. Schwungrad nach Anspruch 7 und 3 , **dadurch gekennzeichnet**, daß ein Schutzelement (9) radial zwischen den elastischen Organen (4), die aus gekrümmten Schraubenfedern bestehen, und der Eintiefung des Kranzes (8) und der Trägerplatte (24) angebracht ist.

9. Schwungrad nach einem der Ansprüche 1 bis 8, bei dem die Trägerplatte (24) an ihrem äußeren Rand einen Schrumpfring (25), etwa einen Anlasserzahnkranz, trägt, **dadurch gekennzeichnet**, daß das umgebogene Ende (83) der Befestigungskante (80) axial zwischen dem besagten Schrumpfring (25) und der Aufpreßschulter (63) eingeschlossen ist.

10. Schwungrad nach Anspruch 9, **dadurch gekennzeichnet**, daß der besagte Schrumpfring (25) eine innere Bohrung aufweist, die mit einer Ausweitung für das Zusammenwirken mit einer formschlüssigen Sicherungssitzfläche (61) versehen ist, die die Trägerplatte an ihrem äußeren Rand aufweist, und daß der Schrumpfring (25) im Verhältnis zu den besagten elastischen Organen (4) axial versetzt ist.

11. Schwungrad nach Anspruch 10, **dadurch gekennzeichnet**, daß die elastischen Organe (4) teilweise unterhalb der besagten Sicherungssitzfläche (61) angeordnet sind.

12. Schwungrad nach Anspruch 11, **dadurch gekennzeichnet**, daß die Sicherungssitzfläche (61) zu einem dünnen Werkstoffstreifen zur Verbindung des besagten Kragens mit dem Hauptteil der Trägerplatte (24) gehört.

13. Schwungrad nach einem der Ansprüche 11 oder 12, das Reibungsmittel (5) umfaßt , **dadurch gekennzeichnet**, daß die Reibungsmittel anhand einer Muffe (27) in einstückiger Ausführung mit der Trägerplatte (24) angeordnet sind, daß die Trägerplatte (24) für die Aufnahme der elastischen Organe ausgetieft ist und daß die besagte Muffe (27) radial unterhalb der elastischen Organe (4) und radial oberhalb einer inneren Nabe angeordnet ist, die die Trägerplatte (24) mittig aufweist.

## Claims

1. Damping flywheel, notably for a motor vehicle, having two masses (2, 3) mounted so as to be able to move with respect to each other counter to circumferentially acting-elastic members (4), namely a first mass (2) intended to be fixed to a driving shaft and a second mass (3) suitable for being fixed with respect to rotation to a driven shaft, in which the first mass (2) has a support piece (24) for an axially oriented ring (8) mounted at the external periphery of the support piece (24) with the intervention of crimping means between the support piece (24) and the ring (8) for their mutual fixing, the said ring serving to hold the elastic members (4) radially outwards, characterised in that the support piece (24) consists of a support plate (24) made of castable material, in that the ring (8) is made of steel, in that the support plate (24) has, at its external periphery, a collar (63, 64, 65-63, 164, 65) projecting radially with a mounting surface (64-164) roughly of axial orientation and a crimping shoulder (63) roughly of transverse orientation, in that the ring (8) has an edge (80) for fixing to the support plate (24) having internally a cavity for mounting the elastic members (4) and a housing for the said collar with a fitting-on surface (82, 182) roughly of axial orientation and initially longer than the mounting surface (64, 164), and in that the end of the fixing edge (80) is of reduced thickness at the fitting-on surface (82, 182), so that, after fitting of the fitting-on surface (82, 182) on the mounting surface (64, 164), the material (83) of the end of the fixing edge (80) is folded in contact with the crimping shoulder (63) for fixing the ring (8) to the support plate (24).

2. Flywheel according to Claim 1, characterised in that the support plate (24) is made of cast iron.

3. Flywheel according to Claim 1 or 2, characterised in that the support plate (24) has a cavity for mounting the elastic members (4).

4. Flywheel according to any one of Claims 1 to 3, characterised in that the end of the fixing edge (80) is divided annularly into lugs.

5. Flywheel according to any one of Claims 1 to 4, characterised in that the collar (63, 64, 65) on the support plate (24) is cylindrical in shape and has, on each side of its axially oriented mounting surface (54), two transverse shoulders (63, 65), namely the crimping shoulder (63) and an end locking shoulder (65) for cooperation with a transversely oriented front shoulder (81) which the housing (81, 82) for the free edge (80) of the ring (8) has for this purpose, and in that the fitting-on surface (82) of the ring (8) is axially oriented.

6. Flywheel according to any one of Claims 1 to 4, characterised in that the collar (63, 164, 65) on the support plate (24) has a mounting surface (182) of roughly axial orientation whilst being frustoconical in shape, and in that the fitting-on surface of the ring (8) has a frustoconical shape complementary to that of the said mounting surface (164).

7. Flywheel according to any one of Claims 1 to 6, characterised in that the said collar extends in axial projection at the external periphery of the support plate (24), whilst the support plate carries protrusions (26) for abutment of the circumferentially acting elastic members (4), and in that the said collar extends in projection and axially with respect to the said protrusions (26).

8. Flywheel according to Claim 7 and 3, characterised in that a protective piece (93) is mounted radially between the elastic members (4), consisting of helical curved springs, and the cavity in the ring (8) and the support plate (24).

9. Flywheel according to any one of Claims 1 to 8, in which the support plate (24) carries at its external periphery a hoop (25) such as a starter ring, characterised in that the folded end (83) of the fixing edge (80) is trapped axially between the said hoop (25) and the crimping shoulder (63).

10. Flywheel according to Claim 9, characterised in that the said hoop (25) has an internal bore provided with a splay for cooperation with an immobilisation surface (61) of complementary shape which the support plate has at its external periphery, and in that the hoop (25) is offset axially with respect to the said elastic members (4).

11. Flywheel according to Claim 10, characterised in that the said elastic members (4) are located partly below the said immobilisation surface (61).

12. Flywheel according to Claim 11, characterised in that the immobilisation surface (61) forms part of a thin band of material joining the said collar to the main part of the support plate (24).

13. Flywheel according to either one of Claims 11 or 12, having friction means (5), characterised in that the friction means are located by means of a sleeve (27) made in a single piece with the support plate (24), in that the support plate (24) is hollowed out for housing the elastic members and in that the said sleeve (24) is located radially below the elastic members (4) and radially above an internal hub which the plate (24) has centrally.
